(19)

Europäisches
Patentamt
European
Patent Office
Office européen
des brevets

(11) **EP 2 953 344 A1**

(12) **EUROPEAN PATENT APPLICATION**

(43) Date of publication:
**09.12.2015 Bulletin 2015/50**

(51) Int Cl.:
*H04N 5/217* (2011.01)  *H04N 5/33* (2006.01)

(21) Application number: **14199795.7**

(22) Date of filing: **22.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Axis AB**
**223 69 Lund (SE)**

(72) Inventor: **Lundberg, Stefan**
**224 56 Lund (SE)**

(74) Representative: **Lindgren, Sven Erik Andreas**
**Awapatent AB**
**Box 1066**
**251 10 Helsingborg (SE)**

(54) **Method for improving live video**

(57)     The present invention relates to a method for removing unwanted objects from live video, wherein unwanted objects are objects comprised in the group of raindrops, snowflakes, insects, and particles. The method comprises the acts of emitting a long wavelength light from the position of the camera in the direction of the scene to be captured, capturing light reflected from the scene using an image sensor including a two-dimensional matrix of photo sensor groups, wherein each photo sensor group includes a number of photo sensor elements each primarily sensing visible light and a photo sensor element primarily sensing long wavelength light and then defining an image mask based on data captured by the long wavelength photo sensor elements. Further the method comprises the acts of composing an image from image data captured by the visible light sensing elements except from the visible light sensing elements representing an area masked by the image mask, inserting in the areas masked by the image mask data for the area from a previously captured image or image data composed from neighbouring pixels, and outputting the final image into an image frame of the live video.

FIG 3

EP 2 953 344 A1

**Description**

Technical field of the invention

The present invention relates to a method for removing unwanted objects from live video. The unwanted objects are objects comprised in the group of raindrops, snowflakes, and insects.

Background of the invention

Today monitoring cameras for capturing live video of a monitored area are commonly used. These monitoring cameras may be arranged to capture live video of an area within a building or of an area outside. A monitoring cameras mounted outside to capture live video are often more rugged than a corresponding indoor camera or it is mounted in a housing that is weather proofing the camera. The extra protection of the outdoor mounted camera is to protect against the harsh conditions that may occur outdoors. In particular is electrical equipment like cameras prone to malfunction in wet conditions.

However, rain and snow is not only a problem for the electronics of the camera it may often be a problem for the live video captured as well. The problem relating to the live video is related to particles like rain or snow passing by the lens of the monitoring camera temporarily obscuring a portion or portions of the scene that is to be captured. Moreover, the particles may cause an operator looking at the captured video to lose focus or worse become tired or strained by trying to see past the obscuring elements.

Further, the particles may introduce errors in alarm functions and video analysis functions, e.g., motion detection. Further, the objects being close to the lens may, due to lighting conditions, generate very bright even overexposed spots which may give most automatic exposure control problems finding a proper exposure for the real scene. These types of problems also occur due to insects flying around in front of the lens. Hence, insects should also belong to the group of particles discussed above. The problems are of course more prominent the closer to the lens the unwanted objects are.

Summary of the invention

One object of the present invention is to remove unwanted objects from live video.

The object is achieved by means of a method according to claim 1. Further embodiments of the invention are presented in the dependent claims.

In particular, according to an embodiment of the invention, a method for removing unwanted objects from live video, wherein unwanted objects are objects comprised in the group of raindrops, snowflakes, insects, and particles, comprises:

emitting a long wavelength light from the position of the camera in the direction of the scene to be captured;

capturing light reflected from the scene using an image sensor including a two-dimensional matrix of photo sensor groups, wherein each photo sensor group includes a number of photo sensor elements each primarily sensing visible light and a photo sensor element primarily sensing long wavelength light;

defining an image mask based on data captured by the long wavelength photo sensor elements;

composing an image from image data captured by the visible light sensing elements except from the visible light sensing elements representing an area masked by the image mask;

inserting in the areas masked by the image mask data for the area from a previously captured image or image data composed from neighbouring pixels; and

outputting the final image into an image frame of the live video.

One advantage of illuminating the scene using long wave length light and then studying the reflected long wave length light in order to determine pixels to replace is that this procedure amplifies characteristics of unwanted objects and facilitates the detection. Moreover, the method is fast and requires little processing capacity. One reason for this is that the number of analysis and comparisons required are limited. Another advantage of using long wave length light is that the light is not visible to people in the scene and does not have any great impact on the visible image captured.

In a further embodiment said long wavelength light have a wavelength greater or equal to 0.7 micrometre. By using light outside the visible spectrum the effect on the image captured based on visible light is less affected by stray light. Said long wavelength light may be infrared light.

Moreover, the defining of an image mask may include defining masked pixels by detecting long wavelength photo elements being exposed to an exposure level that is higher than or equal to a predetermined detection threshold. This makes it possible to adjust the sensitivity of the detection of unwanted objects. The threshold may be set to correspond to an exposure level corresponding to a fully saturated pixel.

Further, the act of defining of an image mask can include defining pixels as masked if the long wavelength photo elements of the pixels are detected as overexposed and if the overexposure is found to be moving based on information from previous frames. By only mask objects that move the accuracy in removing unwanted objects is increased. One reason for this is that the risk of removing highly reflective surfaces at the distance of the scene is decreased. The image mask may be information identifying areas of the captured image as masked areas.

Said defining of pixels as included in an image mask may require a combination of conditions being fulfilled, wherein a first condition is that the pixels are related to long wavelength photo elements outputting a signal level equal to or higher than a threshold level and wherein a second condition is that an area of pixels according to the first condition is identified as moving. An advantage of this feature is that the likely hood of removing unwanted objects and not relevant features are increased. Moreover, the identification of an area of pixels as moving may be achieved using any standard motion detection scheme, e.g., by comparing pixels of a presently processed image from long wave length photo sensor elements with a previously processed image from long wave length photo sensor elements.

Further, the number of photo sensor elements each primarily sensing visible light may be three.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description. Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a sensor" or "the sensor" may include several sensors, and the like. Furthermore, the words "comprising" and "comprised" do not exclude other elements or steps.

Brief description of the drawings

Other features and advantages of the present invention will become apparent from the following detailed description of a presently preferred embodiment, with reference to the accompanying drawings, in which

Fig 1 is a schematic illustration of a monitoring situation in which one embodiment of the invention may be used,
Fig 2a is an example of an image frame that may be captured by a monitoring camera not implementing the invention,
Fig 2b is an example of the next image frame, in relation to the image frame of Fig 2a, that may be captured by a monitoring camera not implementing the invention,
Fig 3 is a flowchart of a process for removing unwanted objects from a live motion video,
Fig 4 is a schematic view of a monitoring camera according to an embodiment of the invention, and
Fig 5 is a schematic view of an image sensor used in an embodiment of the invention.

Further, in the figures like reference characters designate like or corresponding parts throughout the several figures.

Detailed description of embodiments

As mentioned above particles in front of and close to the lens may be a problem for both the operator and for video analysis functions of the camera. Man of these particles are moving through the air in front of the lens and may be any particles, e.g., rain drops, snowflakes, insects, dust, seeds, etc.

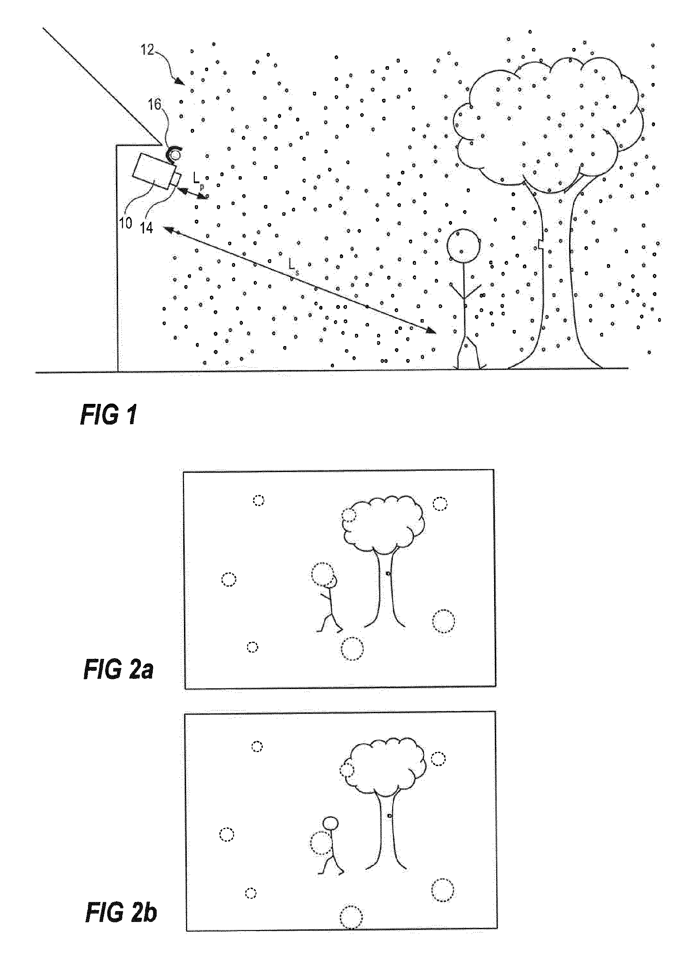

In Fig 1 an example of a situation where a monitoring camera 10 is mounted outdoor and is capturing motion video of a scene in which it is raining. The raindrops 12, especially the ones closer to the camera, are unwanted objects in the captured motion video as they obscure the interesting parts in the scene. Two consecutive images captured by the camera in Fig 1 are shown in Figs 2a and 2b. Raindrops further from the camera 10 and the lens 14 may have the effect of softening of the captured video while the individual raindrops 12 close to the camera may be visible and thereby obscuring the scene to be captured. The raindrops 12 are moving past the lens, see in particular Figs 2a and 2b where the raindrops in Fig 2b have moved in the image in relation to corresponding raindrops in Fig 2a, and may therefore trigger motion detection in the camera 10 or in a system connected to the camera. The problem is even greater in systems where the scene is illuminated by some light source 16 mounted near the camera as the unwanted objects close by then will be registered as overexposed dots or blobs by the image sensor due to the light source 16 being adapted to illuminate a scene much further away from the sensor and thereby is illuminating the particles close to the lens with too much light for a normal exposure. The great difference in exposure between object nearby and at a further distance, when the illumination of the scene is set for the further distance, is easily understood if the fact that the light intensity decreases by the square of the distance, i.e. reflected light intensity from the scene Is is inversely proportional to the square of twice the distance Ls to the scene and the reflected light intensity from a nearby particle Ip is inversely proportional to the square of twice the distance Lp.

$$l_s \propto \frac{1}{(2L_s)^2}$$

$$l_p \propto \frac{1}{(2L_p)^2}$$

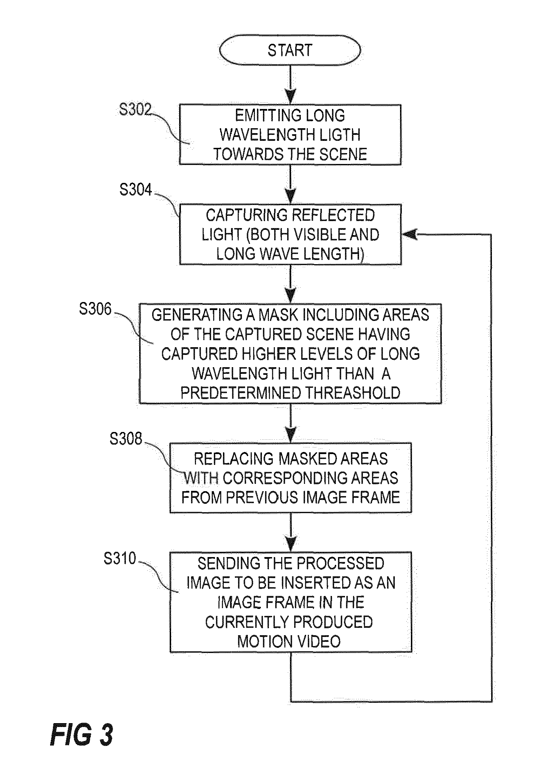

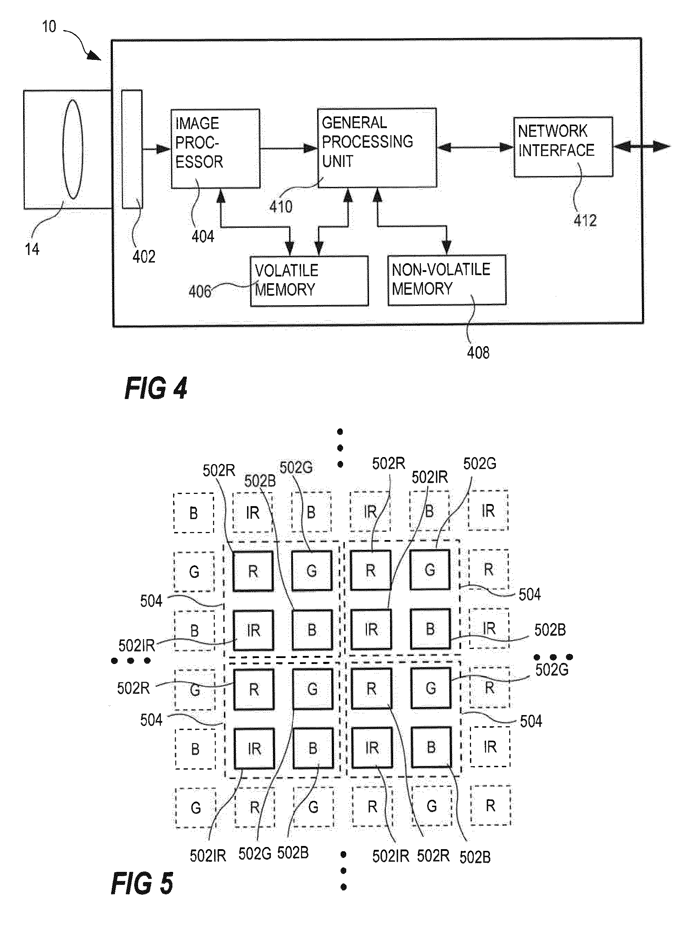

The inventor has realised that the fact that light intensity is inversely proportional to the travelled distance of the light may be utilised in order to remove unwanted nearby objects, such as raindrops, snowflakes, insects, and other particles, from the captured live video. In one embodiment of the invention, see flowchart in Fig 3 and schematic diagrams of Figs 4 and 5, the scene is illuminated, S302 using light of long wavelength, e.g., electromagnetic radiation of a wavelength between 750nm and 1 mm. The monitoring camera 10 captures, S304, reflected light by means of an image sensor 402. The image sensor is arranged to capture the reflected light using a matrix of photo sensing elements 502 arranged in photo sensor groups 504, each photo sensor group 504 including four photo sensing elements 502. The photo sensor elements 502 in a photo sensor group 504 are in one embodiment primarily sensing one wave length range each. In this example the image sensor is described as including four photo sensing elements in each group. However, the invention is not necessarily limited to this number of photo sensing elements in each group.

In the example of Fig 5 the photo sensor elements 502 of a photo sensor group 504 are three photo sensor elements 502R, 502G, 502B, primarily sensing visible light, e.g. red, green, and blue light, and one photo sensor element 502IR primarily sensing long wavelength light, e.g. infrared light. From the information captured by the IR photo sensor element 502IR an image mask is generated, S306. Each IR photo sensor element 502IR represents an image area including the photo sensor elements of the same photo sensor group 504.

A decision whether an area represented by a photo sensor group 504 is to be masked is then made based on the signal level of the IR photo sensor element 502IR of that photo sensor group 504. The image areas including photo sensor groups 504 having an IR photo sensor element which has a signal level that is higher than a predetermined signal level is determined to be masked. This decision may be performed in an image processor 404 in the monitoring camera 10. Then the masked image areas of the presently processed image originating from image data of the visible light sensor elements 502R, 502G, 502B, are replaced with image data from the visible light sensor elements of the corresponding area in the previous image included in the motion video, S308. This may be achieved by simply retrieving the image data of the masked positions from the previously generated image and inserting this image data in the presently processed image. Alternatively, the image data for the masked areas is retrieved from the pixels surrounding the masked areas. This may be achieved by simply inserting the value of a neighbouring pixel or more elaborate such as by calculating a mean value from a plurality of neighbouring pixels. In other terms, the image may be seen as composed from image data captured by the visible light sensing elements except from the visible light sensing from the visible light sensing elements representing an area masked by the image mask. The skilled person would appreciate further methods of replacing the image data of the masked areas. The replacement of image data at the masked positions in the presently processed image may be performed in a plurality of ways, examples will be presented below.

Then the presently processed image is sent, S310, to a next step in the image handling pipe of the camera as an image frame ready to be inserted as the latest image frame in the motion video stream of the monitoring camera 10. When the presently processed image has been inserted in the motion video stream of the monitoring camera the process returns to S302 in order to capture and process the next image frame in the motion video.

The motion video stream generated in this process may then be encoded and transmitted to a motion video receiver, e.g. a storage device or a display device. Moreover, the processed image may be analysed for motion in a motion detection function which is more reliable now when the unwanted objects have been removed.

The monitoring camera according to one embodiment of the invention may include more means and devices for general operations than described in this application. The means and devices not related to the invention are left out in from the description as they are already known to the person skilled in the art and in order to facilitate the understanding of the invention. Now referring to Fig 4, in addition to the features of the monitoring camera 10 already mentioned, i.e. the lens 14, the image sensor 402, and the image processor 404, the monitoring camera includes a volatile memory 406 for temporary storage of operational data and image data, a non-volatile memory 408 for storage of program code and settings, and a general processing unit 410 for controlling the general operation of the monitoring camera. Further the monitoring camera 10 includes a network interface 412 connecting the monitoring device to a network for delivery of motion video to a video server, to a storage device, e.g., a Network Attached Storage, or a display device arranged to display the captured motion video.

The process of the monitoring camera as described in this document may be implemented in logical circuitry, as program code executed by image processor 404 and/or general processing unit 410, or a combination of these.

The image sensor 402 according to one embodiment of the invention includes, as shortly described above, a matrix of photo sensing elements 502, see Fig 5. The sensor may be a CMOS sensor or a CCD sensor. In this example embodiment the photo sensing elements is arranged in photo sensor groups 504 each including four photo sensing elements 502. The photo sensing elements in a photo sensor group are arranged to sense different wavelengths of light. Three photo sensor elements 502R, 502G, 502B, primarily senses visible light, e.g. red, green, and blue light, and one photo sensor element 502IR primarily senses long wavelength light, e.g. infrared light. The arrangement may be seen as the well-known Bayer pattern in which one of the photo sensor element arranged to primarily sense green is exchanged for one that is primarily sensing infra-red. In some implementations the photo sensing elements primarily sensing visible light will sense some infra-red light due to difficulties in filtering only visible light. In such implementations the corresponding infra-red light level may be subtracted from the light level of each photo sensing element at a later stage in the process.

The light source 16 emitting long wave length light, e.g., IR- light onto the scene to be captured may be any known IR-light source 16. These types of IR-light sources are used in monitoring and surveillance systems today and are therefore known to the skilled person. The light source 16 is for example arranged next to the monitoring camera in order to send the IR-light in substantially the same direction as the camera is directed. In this way much of the emitted IR-light reflected will be reflected back to the camera. In some monitoring cameras the light source 16 are embedded.

In the example process discussed above, referring to Fig 3, the detection of unwanted objects in the image, S306, is performed by analysing the output from the photo sensing elements 502IR that is sensing long wavelength light. Further, the output from each IR photo sensing element 502IR is compared with a threshold value and if the output from a IR photo sensing element 502IR exceeds the threshold value then an object in the area represented by the IR photo sensing element 502IR is determined to be close to the camera. The determination of the object represented by the IR photo sensing element 502IR being close to the camera is based on the fact that light intensity is inversely proportional to the square of the distance. In many cases, e.g., when the distance to the scene of interest is quite long in relation to the distance to disturbing particles, this check of the intensity of the reflected long wave length light is enough. The output of a photo sensing element corresponds to the light intensity that was experienced by the photo sensing element; this may also be described as the number of photons detected during a predetermined time.

However, there may be situations where the above detection scheme is not enough and the detection has to be supplemented by further analysis of the output from the IR photo sensing elements 502IR. One example is to identify objects or blobs in an image generated from the output of the IR photo sensor elements and generating a mask based on these objects or blobs which are smaller than a predetermined size, e.g., having a width and height smaller than 20 pixels, respectively, and wherein the objects or blobs are represented by outputs from the photo sensing elements forming the object or blob that have a higher value than said threshold value.

Another detection scheme that may be used on its own or in combination with the above ones, is to detect temporary lines in the IR image, these lines may occur as a result of rain falling fast and is depending on the exposure time and the speed of the raindrops. Known methods for identifying lines may be applied to the image represented by the outputs from the IR photo sensors 502IR.

Yet another detection scheme may further include detecting movement or motion in the image data captured by the IR photo sensing elements. The scheme may then require that an area is masked only if it is moving and the intensity value of the IR photo sensing element are greater than or equal to the threshold value.. This may be performed using well known motion detection algorithms or tracking algorithms. In this way we will avoid masking stationary highly IR reflecting or IR emitting objects or features of the scene.

The masking scheme may be made even more elaborate by adding object recognition arranged to recognise faces and/or license plates. When such objects are recognised they should not be masked even if the other predetermined criteria are fulfilled. These objects and/or their pixels may be marked as "interesting" and thereby override being masked. The risk of masking interesting features in the video is thereby avoided even if they accidentally are visible in the long wave length range at a high enough intensity as to be masked.

These detected sensor elements and/or image areas may then be used to define a mask for the areas represented by detected IR photo sensing elements 502IR. Defining a mask from such values is a process well known to the person skilled in the art and is therefore not described herein.

The areas of the image based on the visible light sensing elements, 502R, 502G, 502B, corresponding to the masked areas, are then replaced by image data from the same areas in a previously generated image, which may have been buffered in the volatile memory 406 of the camera. The replacement operation may include blending or transparency of pixels in the perimeter of the masked area, in order to make the insertion blend in more than if a hard transition was used. The mask may be defined for the entire image before replacement is performed, this is particular useful if blending at the edges of a mask is to be implemented. However, the masking and replacing may be performed more or less on the fly as well. In such an implementation the detection of an IR photo sensing element having a value equal to or exceeding the threshold value could control a mixer or a switch to insert a Value representing a corresponding pixel or pixels from the previous image frame while pixels are retrieved from the presently processed frame when this value from the IR photo sensing element is below the threshold value. Thereby, pixels represented by IR photo sensing elements that have values equal to or higher than the threshold will be replaced by pixels not including an unwanted object.

Additionally, the monitoring camera may be arranged to mix image data from the IR photo sensing elements into the visual image. This could be particularly useful when capturing a scene at night and during other low lighting conditions. The IR image data may be mixed into the visual image, e.g. into the RGB pixels, as a monochrome image.

**Claims**

1. Method for removing unwanted objects from live video, wherein unwanted objects are objects comprised in the group of raindrops, snowflakes, insects, and particles, said method comprising:

   emitting a long wavelength light from the position of the camera in the direction of the scene to be captured,
   capturing light reflected from the scene using an image sensor including a two-dimensional matrix of photo sensor groups, wherein each photo sensor group includes a number of photo sensor elements each primarily sensing visible light and a photo sensor element primarily sensing long wavelength light,
   defining an image mask based on data captured by the long wavelength photo sensor elements,
   composing an image from image data captured by the visible light sensing elements except from the visible light sensing elements representing an area masked by the image mask,
   inserting in the areas masked by the image mask data for the area from a previously captured image or image data composed from neighbouring pixels, and
   outputting the final image into an image frame of the live video.

2. Method according to claim 1, wherein said long wavelength light have a wavelength greater or equal to 0.7 micrometre.

3. Method according to any one of claims 1-2, wherein said long wavelength light is infrared light.

4. Method according to any one of claims 1-3, wherein said defining of an image mask includes defining masked pixels by detecting long wavelength photo elements being exposed to an exposure level that is higher than or equal to a predetermined detection threshold.

5. Method according to claim 4, wherein the detection threshold is the exposure level corresponding to a fully saturated pixel.

6. Method according to any one of claims 1-5, wherein said defining of an image mask includes defining pixels as masked if the long wavelength photo elements of the pixels are detected as overexposed and if the overexposure is found to be moving based on information from previous frames.

7. Method according to any one of claims 1-6, wherein said image mask is information identifying areas of the captured image as masked areas,

8. Method according to any one of claims 1-7, wherein said defining of pixels as included in an image mask requires a combination of conditions being fulfilled, wherein a first condition is that the pixels are related to long wavelength photo elements outputting a signal level equal to or higher than a threshold level and wherein a second condition is that an area of pixels according to the first condition is identified as moving.

9. Method according to claim 8, wherein identification of an area of pixels as moving is achieved by comparing pixels of a presently processed image from long wave length photo sensor elements with a previously processed image from long wave length photo sensor elements.

10. Method according to any one of claims 1-9, wherein the number of photo sensor elements each primarily sensing visible light is three.

**FIG 1**

**FIG 2a**

**FIG 2b**

START

S302 — EMITTING LONG WAVELENGTH LIGTH TOWARDS THE SCENE

S304 — CAPTURING REFLECTED LIGHT (BOTH VISIBLE AND LONG WAVE LENGTH)

S306 — GENERATING A MASK INCLUDING AREAS OF THE CAPTURED SCENE HAVING CAPTURED HIGHER LEVELS OF LONG WAVELENGTH LIGHT THAN A PREDETERMINED THREASHOLD

S308 — REPLACING MASKED AREAS WITH CORRESPONDING AREAS FROM PREVIOUS IMAGE FRAME

S310 — SENDING THE PROCESSED IMAGE TO BE INSERTED AS AN IMAGE FRAME IN THE CURRENTLY PRODUCED MOTION VIDEO

## FIG 3

**FIG 4**

**FIG 5**

Europäisches
Patentamt

European
Patent Office

Office européen
des brevets

# EUROPEAN SEARCH REPORT

Application Number

EP 14 19 9795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 103 442 179 A (BEIJING ZHIGU RUITUO TECHNOLOGY SERVICES CO LTD) 11 December 2013 (2013-12-11) * the whole document * ----- | 1-10 | INV. H04N5/217 H04N5/33 |
| Y | WO 2009/046268 A1 (MAGNA ELECTRONICS [US]; LU YUESHENG [US]; HIGGINS-LUTHMAN MICHAEL J [U) 9 April 2009 (2009-04-09) * paragraphs [0006], [0007], [0040] - [0042], [0050]; figures 4,8 * ----- | 1-3,7-10 | |
| Y | WO 2013/081162 A1 (RICOH CO LTD [JP]; KASAHARA RYOSUKE [JP]) 6 June 2013 (2013-06-06) * page 7, lines 4-16 * * page 8, line 30 - page 11, line 19 * * page 14, line 29 - page 15, line 29 * * page 21, lines 19-26 * * page 40, lines 10-29; figure 2 * ----- | 1-9 | |

TECHNICAL FIELDS
SEARCHED        (IPC)

H04N

The present search report has been drawn up for all claims

| Place of search | Date of completion of the search | Examiner |
|---|---|---|
| Munich | 11 June 2015 | Rolet, Etienne |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 ........................................................................

& : member of the same patent family, corresponding
    document

EPO FORM 1503 03.82 (P04C01)

| Patent document cited in search report | | | Publication date | Patent family member(s) | | | Publication date |
|---|---|---|---|---|---|---|---|
| CN 103442179 | A | | 11-12-2013 | NONE | | | |
| WO 2009046268 | A1 | | 09-04-2009 | US | 2010289885 | A1 | 18-11-2010 |
| | | | | US | 2013250103 | A1 | 26-09-2013 |
| | | | | US | 2015092059 | A1 | 02-04-2015 |
| | | | | WO | 2009046268 | A1 | 09-04-2009 |
| WO 2013081162 | A1 | | 06-06-2013 | CN | 104041008 | A | 10-09-2014 |
| | | | | EP | 2786558 | A1 | 08-10-2014 |
| | | | | JP | 5633503 | B2 | 03-12-2014 |
| | | | | JP | 2013115625 | A | 10-06-2013 |
| | | | | US | 2014300744 | A1 | 09-10-2014 |
| | | | | WO | 2013081162 | A1 | 06-06-2013 |